# EUROPÄISCHE PATENTSCHRIFT

(11) **EP 2 981 602 B1**
(45) Veröffentlichungstag und Bekanntmachung des Hinweises auf die Patenterteilung: **07.06.2017**
(21) Anmeldenummer: 14715569.1
(22) Anmeldetag: 02.04.2014
(51) Int. Cl.: C12C 7/04, C12C 7/22, F28D 15/00, F28D 20/02

(54) **VORRICHTUNG UND VERFAHREN ZUM ERWÄRMEN EINES FERMENTIERBAREN AUSGANGSSTOFFES ZUR GETRÄNKEHERSTELLUNG**
DEVICE AND METHOD FOR HEATING A FERMENTABLE STARTING MATERIAL FOR BEVERAGE PRODUCTION
DISPOSITIF ET PROCÉDÉ POUR CHAUFFER UNE SUBSTANCE DE BASE FERMENTABLE EN VUE DE LA FABRICATION D'UNE BOISSON

(30) Priorität: 03.04.2013 DE 102013205844
(43) Veröffentlichungstag der Anmeldung: 10.02.2016
(73) Patentinhaber: O. Salm & Co. Ges.m.b.H., 1072 Wien (AT)
(72) Erfinder: WELLEDITS, Albert, A-1130 Wien (AT)
(74) Vertreter: TBK
(86) Internationale Anmeldenummer: PCT/EP2014/056563
(87) Internationale Veröffentlichungsnummer: WO 2014/161870

(56) Entgegenhaltungen:
- WO-A1-2011/076410
- AT-B- 390 266
- DE-A1-102010 041 955
- DE-C1- 4 304 975
- ALAWADHI ET AL: "A solidification process with free convection of water in an elliptical enclosure", ENERGY CONVERSION AND MANAGEMENT, ELSEVIER SCIENCE PUBLISHERS, OXFORD, GB, Bd. 50, Nr. 2, 1. Februar 2009 (2009-02-01), Seiten 360-364, XP025684595, ISSN: 0196-8904, DOI: 10.1016/J.ENCONMAN.2008.09.015 [gefunden am 2008-10-26]
- REGIN A F ET AL: "Heat transfer characteristics of thermal energy storage system using PCM capsules: A review", RENEWABLE AND SUSTAINABLE ENERGY REVIEWS, ELSEVIERS SCIENCE, NEW YORK, NY, US, Bd. 12, Nr. 9, 1. Dezember 2008 (2008-12-01), Seiten 2438-2458, XP025426572, ISSN: 1364-0321, DOI: 10.1016/J.RSER.2007.06.009 [gefunden am 2008-09-12]

## Beschreibung

Die Erfindung betrifft eine Vorrichtung und ein Verfahren zum Erwärmen eines fermentierbaren Ausgangsstoffes zur Getränkeherstellung gemäß dem Oberbegriff des Anspruchs 1 bzw. des Anspruchs 8.

Bekannt ist aus dem Stand der Technik eine in der Druckschrift AT 390 266 B offenbarte Vorrichtung zum Erwärmen von Braumaische. In dieser Vorrichtung ist eine Leitung durch ein regelmäßig gewundenes (wendelförmiges) Rohr gebildet, das sich innerhalb eines Brennraums befindet. Die Leitung steht mit einer Wärmequelle in Wärme übertragendem Kontakt, wodurch die durch die Leitung strömende Braumaische erwärmt wird. Eine derartige Vorrichtung ist auch als sogenannter Außenkocher bekannt. In Vorrichtungen wie z. B. der anhand der Druckschrift AT 390 266 B beschriebenen ist es möglich, eine beliebige fermentierbare Flüssigkeit unter Einsatz einer vergleichsweise hohen Temperatur innerhalb kurzer Zeit schonend zu erwärmen.

DE4304975C1 offenbart eine Brauanlage mit einem Heisswassertank (30), einem Warmwassertank (24), mehreren Wärmeaustauschern (13, 20, 26), einem Maischetank (33) und einer Würzepfanne (15). Heiz- beziehungsweise Warmwasser wird im Kreislauf geführt und zur Erhitzung der Maische wie auch der Bierwürze verwendet, seinerseits im Pfannendunstkondensator (26) erhitzt, und zwischenzeitlich in den Tanks (24) beziehungsweise (30) eingelagert.

Da in einigen Staaten die Verwendung eines Gas- oder Ölbrenners gesetzlich verboten ist, besteht Bedarf eine ökologisch und wirtschaftlich sinnvolle Alternative zu der bekannten Vorrichtung zum Erwärmen von Braumaische zu schaffen. Eine erfindungsgemäße Vorrichtung zum Erwärmen eines fermentierbaren Ausgangsstoffes zur Getränkeherstellung hat einen Wärmetransportmittelkreislauf, in dem ein Wärmetransportmittel in einer ersten Strömungsrichtung über einen Wärmespeicher zum Speichern/Abgeben von Wärme, ein Heizmittel zum Erwärmen des Wärmetransportmittels und einen Wärmeabgaberaum, in dem die Wärme von dem Wärmetransportmittel zu dem in einer Leitung strömenden fermentierbaren Ausgangsstoff übertragen wird, transportiert wird.

Die Erfindung ermöglicht es, ein bereits aus einem Wärmespeicher mit Wärme beaufschlagtes Wärmetransportmittel durch ein Heizmittel weiter mit Wärme zu beaufschlagen, um die Gesamtwärme in dem Wärmeabgaberaum zu dem in der Leitung strömenden fermentierbaren Ausgangsstoff abzugeben. Dabei ist es ebenfalls möglich, lediglich die dem Wärmespeicher entnommene Wärme zu transportieren und so verschiedene Aufwärmstufen zu realisieren. Wenn ein Aufwärmvorgang des fermentierbaren Ausgangsstoffes beendet ist, kann der Wärmespeicher mit der dem Wärmetransportmittel zugeführten Wärme des Heizmittels wieder teilweise oder vollständig geladen werden.

Fermentierbare Ausgangsstoffe gemäß der Erfindung können dabei alle Stoffgemische oder Reinsubstanzen sein, die zumindest eine fermentierbare Substanz enthalten. Eine fermentierbare Substanz im Sinne der Erfindung ist eine chemische Verbindung, die unter anaeroben und/oder aeroben Bedingungen von Mikroorganismen, wie etwa Hefen und Bakterien, als Energie- bzw. Kohlenstoffquelle genutzt werden kann. Insbesondere fallen darunter Monosaccharide, Disaccharide und Polysaccharide. Besonders bevorzugt sind dabei fermentierbare Ausgangsstoffe, die mindestens eines von Fructose, Glucose, Saccharose, Maltose (Malzzucker) oder Stärke oder eines ihrer Abbauprodukte enthalten. Insbesondere fallen darunter Ausgangsstoffe zur Herstellung von Bier, wie z. B. Maische, Brauwürze, abgeleitete Nachprodukte, Rohfrüchte in Wasser gelöst (wie z. B. Reis oder Mais).

Erfindungsgemäß kann die Strömungsrichtung des Wärmetransportmittels in dem Wärmetransportmittelkreislauf zum Laden des Wärmespeichers in eine zweite Strömungsrichtung umgekehrt werden.

Dies ist insbesondere vorteilhaft, da das erwärmte Wärmetransportmittel kürzere Wege zurücklegen kann und es somit zu geringeren Abwärmeverlusten kommt.

Erfindungsgemäß kann der Wärmetransportmittelkreislauf über eine den Wärmeabgaberaum umgehende Umgehungsleitung verfügen, durch die das Wärmetransportmittel während des Ladens des Wärmespeichers transportiert wird.

Da das Wärmetransportmittel in diesem Fall nicht über einen Wärmeabgaberaum geführt werden muss, sind energetisch günstigere und verkürzte Ladevorgänge möglich.

Erfindungsgemäß kann der Transport des Wärmetransportmittels über eine Pumpe bewirkt werden, die in einem nicht aktivierten Zustand einen Durchsatz des Wärmetransportmittels verhindert.

Erfindungsgemäß kann der Transport des Wärmetransportmittels in der ersten Strömungsrichtung durch eine außerhalb einer dem Wärmeabgaberaum umgehenden Umgehungsleitung vorgesehenen Pumpe erfolgen, während der Transport des Wärmetransportmittels in einer zweiten Strömungsrichtung durch eine in der dem Wärmeabgaberaum umgehenden Umgehungsleitung vorgesehene Pumpe erfolgt. Da jede der Pumpen derart ausgeführt ist, dass in einem nicht aktivierten Zustand der Pumpe ein Durchsatz des Wärmetransportmittels verhindert ist, ist durch diese Anordnung der Pumpen sichergestellt, dass das Wärmetransportmittel jeweils auf kürzestem Wege zu dem Wärmeabgaberaum einerseits bzw. zu dem Wärmespeicher andererseits transportiert wird. Erfindungsgemäß kann der Wärmespeicher als Latentwärmespeicher ausgebildet sein, in dem eine Übertragung von Wärme von dem Wärmetransportmittel zu einem Phasenwechselmaterial in dem Latentwärmespeicher oder umgekehrt statt finden kann.

Erfindungsgemäß kann als Phasenwechselmaterial ein Paraffin oder ein Salz eingesetzt sein, wobei die bevorzugte Verflüssigungstemperatur zwischen 130°C und 50°C liegt und dessen Rekristallisierungstemperatur zwischen 130°C und 120°C liegt.

Erfindungsgemäß kann das Heizmittel als elektrische Heizung ausgeführt sein. Außerdem kann das Wärmetransportmittel ein Thermoöl sein.

Die Ausführung als elektrisches Heizmittel ermöglicht die Einhaltung von gesetzlichen Rahmenbedingungen z.B. in Fällen, in denen Gas- oder Ölbrenner verboten sind. Der Einsatz von Thermoöl kann besonders vorteilhaft sein, da Thermoöl beispielsweise mittels elektrischer Heizelemente erwärmt werden kann, wodurch bei entsprechender Stromerzeugung (Windstrom, Solarstrom, Wasserkraft) eine Abgasbelastung der Umwelt vermieden wird. Darüber hinaus kann Thermoöl für höhere Temperaturbereiche verwendet werden, ohne seinen Aggregatzustand oder Druck zu ändern, da seine Siedetemperatur unter Umgebungsdruck mehr als 300° C beträgt. Daher ist eine Verwendung von Thermoöl in Temperaturbereichen von bis zu 300° C möglich. Außerdem ist die energetische Effizienz von Thermoöl wesentlich besser als die von z. B. Wasser oder Dampf. Ein Erfindungsgemäßes Verfahren zum Erwärmen eines fermentierbaren Ausgangsstoffes zur Getränkeherstellung weist die folgenden Schritte auf.
- Transportieren des fermentierbaren Ausgangsstoffes durch eine Leitung, die durch einen Wärmeabgaberaum geführt ist,
- Transportieren eines Wärmetransportmittels in einer ersten Strömungsrichtung in einem Kreislauf über einen Wärmespeicher zum Speichern/Abgeben von Wärme, ein Heizmittel zum Erwärmen des Wärmetransportmittels, und den Wärmeabgaberaum, in dem die Wärme von dem Wärmetransportmittel zu dem in der Leitung strömenden fermentierbaren Ausgangsstoff übertragen wird.

Erfindungsgemäß kann der Wärmespeicher nach seiner teilweisen oder vollständigen Entladung durch Umkehren der Strömungsrichtung des Wärmetransportmittels in einer zweiten Strömungsrichtung wieder geladen werden.

Weitere Vorteile der Erfindung werden aus der folgenden Beschreibung von derzeit bevorzugten Ausführungsformen deutlich, die zusammen mit den anhängenden Figuren zu berücksichtigen ist. In den Figuren zeigt:
Fig. 1 eine schematische Ansicht einer erfindungsgemäßen Vorrichtung zum Erwärmen eines fermentierbaren Ausgangsstoffes zur Getränkeherstellung gemäß einer bevorzugten Ausführungsform der Erfindung;
Fig. 2 eine schematische Ansicht eines Entladevorgangs eines Wärmespeichers, in dem ein fermentierbarer Ausgangsstoff zur Getränkeherstellung erwärmt wird;
Fig. 3 eine schematische Ansicht eines Ladevorgangs des Wärmespeichers;
Fig. 4 eine Alternative zur bevorzugten Ausführungsform der Erfindung.

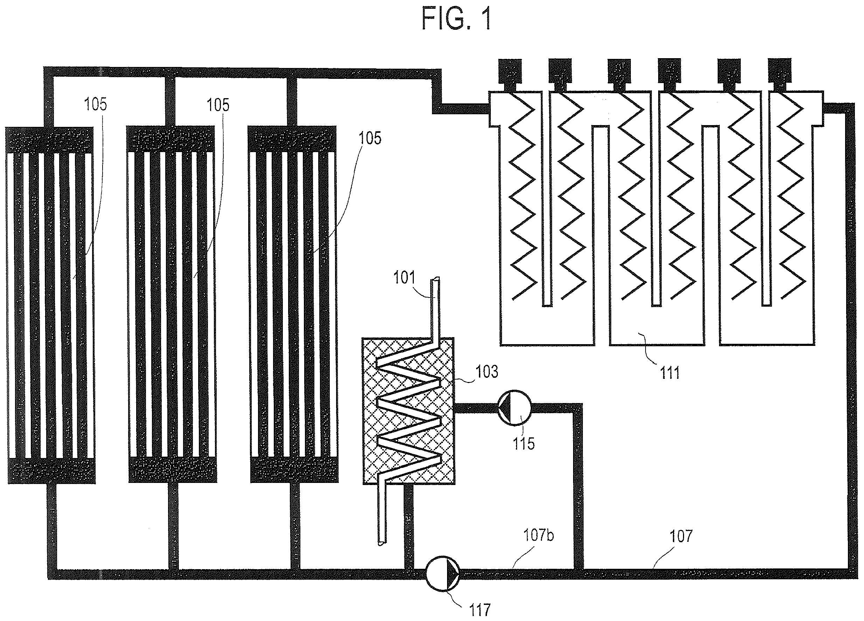

Eine bevorzugte Ausführungsform der Erfindung wird anhand von Figuren 1 bis 3 beschrieben. In der Beschreibung der Ausführungsform dienen Maische und/oder Würze als Beispiele für den fermentierbaren Ausgangsstoffes zur Getränkeherstellung.

Die erfindungsgemäße Vorrichtung zum Erwärmen eines fermentierbaren Ausgangsstoffes zur Getränkeherstellung besteht im Wesentlichen aus einem Kreislauf 107, in dem ein Thermoöl als Beispiel für ein erfindungsgemäßes Wärmetransportmittel transportiert wird. In dem Kreislauf 107 sind im Uhrzeigersinn ein Wärmespeicher (auch als Latentwärmespeicher bezeichnet) 105, eine elektrische Heizung (auch als thermo-elektrische Heizung bezeichnet) 111 und ein (bevorzugt als Außenkocher ausgeführter) Wärmeabgaberaum 103 angeordnet.

Der Wärmespeicher 105 ist gemäß der Ausführungsform durch eine Vielzahl von mit einem Paraffin als Phasenwechselmaterial befüllten Rohrbündelspeichern ausgebildet, die in paralleler Weise geschaltet sind.

Die elektrische Heizung 111 dient zum Erwärmen des durch diese hindurchströmenden Thermoöls. Das erwärmte Thermoöl gibt in dem Wärmeabgaberaum 103 seine Wärme zu einer in einer Leitung 101 strömenden Maische oder einer Würze ab und wird dabei abgekühlt. Nach dem Durchströmen des Wärmeabgaberaums strömt das Thermoöl wiederum zu dem Wärmespeicher 105. Die Strömung des Thermoöls in dieser ersten Strömungsrichtung (in der Figur gemäß dem Uhrzeigersinn) wird durch eine Pumpe 115 erreicht, die gemäß der Ausführungsform in der ersten Strömungsrichtung stromaufwärts des Wärmeabgaberaums 103 angeordnet ist und als Entladepumpe (zum Entladen des Wärmespeichers 105) dient.

Entsprechend ist es möglich, bei geladenem Wärmespeicher 105 das durch den Wärmespeicher 105 strömende Thermoöl zu erwärmen, das bereits erwärmte Thermoöl in der elektrischen Heizung 111 weiter zu erwärmen und die Wärme in dem Wärmeabgaberaum 103 zu der Maische oder der Würze abzugeben, wodurch diese erwärmt werden.

Dabei ist es auch möglich, das Thermoöl durch die elektrische Heizung durchzuführen, ohne diese zu aktivieren. Dementsprechend transportiert das Thermoöl in diesem Fall lediglich die dem Wärmespeicher 105 entnommene Wärme.

Die Vorrichtung zum Erwärmen von Maische oder Würze gemäß der Ausführungsform verfügt außerdem über eine Umgehungsleitung 107b, die den Wärmeabgaberaum 103 umgeht. In der Umgehungsleitung 107b ist eine Pumpe 117 vorgesehen, die das Thermoöl in eine entgegengesetzte Richtung wie die Pumpe 115 pumpt.

Nachdem ein Aufwärmvorgang der Maische oder Würze beendet wurde, kann erfindungsgemäß durch Abschalten der Pumpe 115, die auch als Entladepumpe bezeichnet wird, und durch Aktivierung der Pumpe 117, die auch als Ladepumpe bezeichnet wird, die Strömungsrichtung des Thermoöls in dem Thermoölkreislauf 107 in eine zweite Strömungsrichtung umgekehrt werden. Somit kann das nun (in der Figur gegen den Uhrzeigersinn) in der zweiten Strömungsrichtung transportierte Thermoöl durch die elektrische Heizung 111 transportiert und in dieser aufgewärmt werden, um danach durch den Wärmespeicher 105 transportiert zu werden, in dem es die von der elektrischen Heizung 111 aufgenommene Wärme wieder an das Paraffin als Phasenwechselmaterial abgibt, um den Wärmespeicher 105 wieder zu laden.

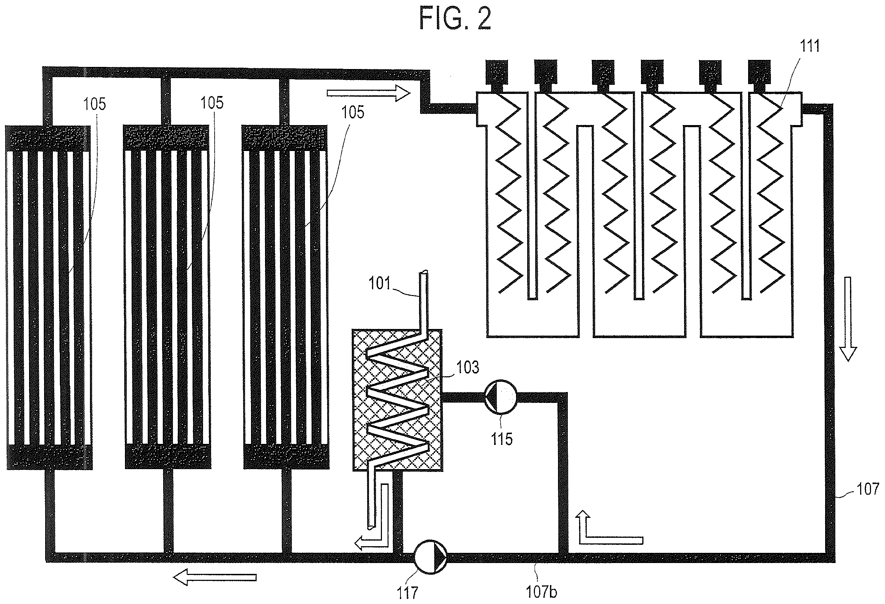

Fig. 2 zeigt schematisch einen Entladevorgang des Wärmespeichers 105 bzw. einen Aufwärmvorgang des in der Leitung 101 transportierten fermentierbaren Ausgangsstoffes zur Getränkeherstellung. In der Fig. 2 bezeichnen die weißen Pfeile die Strömungsrichtung des Thermoöls in dem Thermoölkreislauf 107. In der Leitung zwischen dem Wärmespeicher 105 und dem Wärmeabgaberaum 101 wird das erwärmte Thermoöl transportiert. Dabei sei darauf hingewiesen, dass das durch die von dem Wärmespeicher 105 abgegebene Wärme erwärmte Thermoöl während des Durchströmens der elektrischen Heizung 111 weiter erwärmt werden kann um einen Spitzenbedarf an Wärme abzudecken, dies aber nicht unabdingbar erforderlich ist.

Das erwärmte Thermoöl wird dann durch die Tätigkeit der Entladepumpe 115 weiter zu dem Wärmeabgaberaum 103 transportiert, wo die Wärme von dem erwärmten Thermoöl zu der in der Leitung 101 strömenden Maische oder Würze abgegeben wird. Das erkaltete Thermoöl fließt dann in der Leitung in der ersten Strömungsrichtung (in der Figur im Uhrzeigersinn) stromabwärts von dem Wärmeabgaberaum 103 weiter zu dem Wärmespeicher 105.

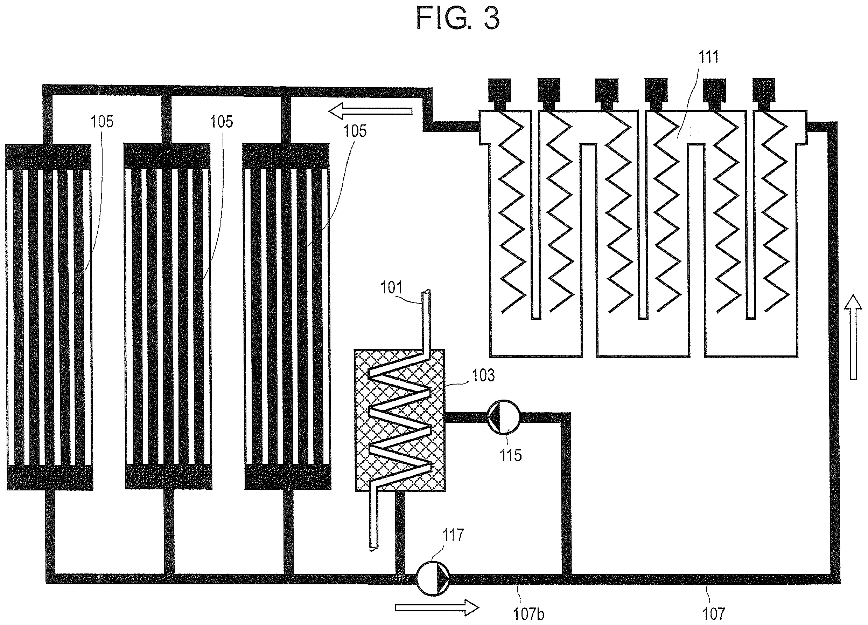

Fig. 3 zeigt schematisch einen Ladevorgang des Wärmespeichers 105, der durchgeführt wird, wenn eine Wärmeabgabe zu dem in der Leitung 101 strömenden Ausgangsstoff zur Getränkeherstellung nicht erforderlich ist. Dies kann beispielsweise der Fall sein, wenn der erwärmte Ausgangsstoff zur Getränkeherstellung beispielsweise im Zuge eines Abläuterprozesses wieder abgekühlt wird, oder die Getränkeherstellung vollständig ruht. In diesem Fall wird das abgekühlte Thermoöl aus dem Wärmespeicher 105 durch die Ladepumpe 117 in der zweiten Strömungsrichtung (in der Figur gegen den Uhrzeigersinn) durch die Umgehungsleitung 107b zu der elektrischen Heizung 111 gepumpt, wo das Thermoöl erwärmt wird. Das erwärmte Thermoöl wird von der elektrischen Heizung 111 weiter zu dem Speicher 105 geleitet, wo es die Wärme zu dem als Phasenwechselmaterial dienenden Paraffin abgibt, um dieses zu verflüssigen. Nach vollständiger Verflüssigung des Paraffins ist der Wärmespeicher 105 vollständig geladen.

Als Pumpen 115, 117 werden bevorzugt Flügelzellenpumpen oder Zahnradpumpen eingesetzt, die pro Umdrehung einen fix definierten Flüssigkeitsdurchsatz gewährleisten, und andererseits in einem abgeschalteten Zustand keine Durchströmung des Thermoöls aufgrund von beispielsweise Druckdifferenzen gestatten. Im Bereich des Speichers 105 und Ladesystems (Heizung 111) sind zwei Strömungsrichtungen möglich, im Bereich des Entladesystems (Wärmeabgaberaum 101 bzw. Aussenkocher) nur eine Strömungsrichtung.

Bevorzugt ist der Wärmespeicher in einer stehenden Position vorgesehen, in der seine Höhe wesentlich größer als seine Breite und Tiefe bzw. seinem Durchmesser ist. Die Rohrbündel sind dabei im Wesentlichen parallel zu einer Hochachse angeordnet.

Während der Ladung (z.B. über Nacht) ist die Ladepumpe 117 aktiviert, entnimmt das kalte Thermoöl unten aus dem/den Latentwärmespeicher(n) 105, erwärmt das kalte Thermoöl bei der Durchströmung des thermoelektrischen Zusatzheizers 111 und führt das heiße Thermoöl wieder oben in den Latentwärmespeicher 105 zurück. Der Latentwärmespeicher 105 wird von oben nach unten geladen. In dieser Funktion, ist die Entladepumpe nicht in Betrieb und verhindert durch ihre Bauform eine ungewollte Durchströmung des Aussenkochers 103.

Bei der Entladung, mit oder ohne thermoelektrische Zusatzheizung 111 wird die Strömungsrichtung in dem Latentwärmespeicher umgekehrt. Die Ladepumpe ist dabei nicht in Betrieb und verhindert durch ihre Bauform, dass das Thermoöl durchströmt. Die Entladepumpe ist in Betrieb und zieht das heiße Thermoöl aus dem Latentwärmespeicher. Das Thermoöl kann zusätzlich noch durch die thermoelektrische Zusatzheizung erwärmt sein. Dies kann in Abhängigkeit von der vorgewählten Heizleistung des gesamten Systems durch den Aussenkocher variabel geregelt werden. Weiter führt die Entladepumpe 115 das erkaltete Thermoöl von unten zurück in den Latentwärmespeicher 105.

Um bei der Umschaltung von reiner Ladung zur Entladung mit oder ohne Zusatzheizung Temperaturspitzen im Aussenkocher zu vermeiden, erfolgt die Umschaltung durch die Pumpen bevorzugt gleitend. Das bedeutet, dass sich die Entladepumpe langsam hinzuschaltet, während die Ladepumpe noch arbeitet, die elektrische Zusatzheizung 111 wird angehalten, da es kurzfristig zu einem Strömungsstillstand im thermoelektrischem Heizsystem 111 kommt, und anschließend wird die Ladepumpe heruntergefahren. Dadurch ändert sich die Strömungsrichtung und die Heizelemente der elektrischen Zusatzheizung 111 können wieder aktiviert werden. Der Vorteil der Strömungsumkehr bei reiner Ladung gegenüber Entladung mit oder ohne Zusatzheizung ergibt sich aus der Thermosyphonwirkung innerhalb des Latentwärmespeichers, da dies einen höheren Ladungsgrad ermöglicht.

Der Ladegrad im Entladungsbetrieb wiederum ist irrelevant, da elektrisch nur zugeheizt wird und die zunehmende Temperaturabnahme des Thermoöls infolge der abnehmenden Kapazität des Latentwärmespeichers ausgeglichen werden soll, bzw. die fehlende Energie nachgespeist werden soll.

Somit kann mit der erfindungsgemäßen Vorrichtung zum Erwärmen von Maische und Würze ein notwendiger elektrischer Anschlusswert bei gleichen Leistungsdaten um ca. 60% reduziert werden und damit einerseits die Bereitstellungskosten (z.B. US$ 6.000,-/1kW über Netzverfügbarkeit) erheblich reduziert werden, andererseits aber auch ein Anschlusswert geringerer Leistung erreicht werden, welcher auch mit alternativen Energien leichter erzielt werden kann.

Im Folgenden wird ein Beispiel zur Anwendung einer erfindungsgemäßen Vorrichtung zum Erwärmen eines fermentierbaren Ausgangsstoffes zur Getränkeherstellung am Beispiel eines Suds zur Bierherstellung gegeben.

Die Energiemenge für einen Sud ergibt sich aus dem Volumen, den Temperaturunterschieden des Braumediums und dem Zeitraster des Prozesses. Beispielweise kann diese Energiemenge (Wärmemenge) für einen 10hl - Dekoktionssud in Verbindung mit einem Aussenkocher 161 kWh betragen. Um das notwendige Zeitraster einzuhalten, muss dabei ein energetischer Anschlusswert von 88 kW für die Beheizung zur Verfügung stehen. Bei Verwendung eines Flüssiggasbrenners ist dieser Wert einfach zu erreichen und auch hinsichtlich der Menge von lediglich 12,5 kg Flüssiggas unproblematisch.

Allerdings kann es sowohl von einem Kostenstandpunkt einerseits wie auch von einem Machbarkeitsstandpunkt andererseits schwierig bis unmöglich sein, diesen Anschlusswert von 88 kW in Form von elektrischer Energie bereitzustellen.

Durch die erfindungsgemäße Vorrichtung mit dem Latentwärmespeicher mit dem Phasenwechselmaterial ist es möglich, Wärme in einem Hochtemperaturbereich - z.B. zwischen 130° C und 150° C zu speichern. Dabei ist es möglich, eine vollständige Ladung des Latentwärmespeichers auch mit einer elektrischen Ladeeinrichtung (thermoelektrische Heizung) mit einem vergleichsweise geringen Anschlusswert zu erreichen. Außerdem kann bei der Entladung des Latentwärmespeichers mit Hilfe dieser thermoelektrischen Heizung auch zugeheizt werden, d.h. die Temperatur des Thermoöls als Wärmetransportmittel kann weiter erhöht werden.

Die Dimensionierung des Latentwärmespeichers in Abhängigkeit der thermoelektrischen Ladeleistung ist in Verbindung mit dem Aussenkochsystem abzustimmen.

Ein Beispiel wird ausgehend von den folgenden Daten gegeben:
Sudwerk-Kapazität: 10hl Ausschlagwürze;
angewendetes Brauverfahren: steigende Infusion;
Einmaischtemperatur: 52°C;
Speicherkapazität des Latentwärmespeichers: 80,62 kWh;
thermoelektrische Thermoöl-Heizung: 30 kW.

Für die Maischarbeit von 52°C auf 78°C wird eine Wärmemenge von ca. 35,19 kWh benötigt. Diese Wärmemenge kann ohne Zusatzheizung aus dem Latentwärmespeicher entladen werden. Dabei befindet sich nach der Maischarbeit noch eine Wärmemenge von 35,19 kWh in dem Latentwärmespeicher. Während eines ersten Abläuterprozesses (Vorderwürze) lädt die thermoelektrische Heizung den Latentwärmespeicher wieder auf. Die dafür verfügbare Zeit beträgt ca. 45 min. In diesem Zeitraum wird dem Latentwärmespeicher über die thermoelektrische Heizung eine Wärmemenge von 22,5 kWh wieder zugeführt, sodass der Latentwärmespeicher nach dem Ende dieser Teilladung über ca. 57,69kWh Energie verfügt.

Mit Beginn eines zweiten Abläuterprozesses (Nachgüsse) muss bereits die in der Sudpfanne befindliche Würze zur Kochtemperatur aufgewärmt werden. Dies muss in einem Zeitraum erfolgen, welcher der Dauer des zweiten Abläuterprozesses entspricht. Die Aufwärmung beginnt bei 72°C und endet bei 98°C. Gleichzeitig wird eine immer größere Menge kälterer Abläuterwürze von den Nachgüssen in die Pfanne nachgeführt. Für diesen Prozess werden ca. 65,5kWh Wärme benötigt. Die Wärme wird dabei einerseits durch die Entladung des Latentwärmespeichers gewonnen, andererseits aber auch zusätzlich dazu aus der thermoelektrischen Heizung. Die Dauer dieses Prozesses beträgt ca. 60min, die Ladeleistung der thermoelektrischen Heizung beträgt dabei 30 kWh.

Aus der Wärmebilanz verbleibt ausgehend von der verbleibenden Wärmemenge des Vorprozesses in dem Latentwärmespeicher, von der Entladung und der Ladung nach dem Ende dieses Prozesses noch eine Wärmemenge von ca. 22,19 kWh im Latentwärmespeicher.

Der letzte Prozess ist das Würzekochen, wofür ca. 36,40kWh benötigt werden. Durch den Einsatz der thermoelektrischen Zusatzheizung und der aus dem Vorprozess verbleibenden Energie in dem Latentwärmespeicher verbleibt nach Abschluss der Würzekochung noch eine Wärmemenge von ca. 15,79 kWh in dem Latentwärmespeicher.

Nach dem Abschluss des Brauvorgangs kann der Latentwärmespeicher mittels der thermoelektrischen Heizung (30 kW Leistung) binnen zwei Stunden wieder zu 100% aufgeladen werden. Dabei findet keine gleichzeitige Entladung statt. Somit ist es möglich, anstelle einer elektrischen Heizung mit einer Leistung von 88 kW mit einer elektrischen Heizung mit nur lediglich 30 kW Leistung die gleichen Leistungswerte zu erzielen. Die gesamte zur Verfügung gestellte Wärmemenge ist in etwa gleich groß, lediglich die Spitzenleistung wird vom Speichersystem abgedeckt.

Insbesondere in entlegenen Gebieten kann auch generell die Verfügbarkeit von elektrischer Energie problematisch sein. In derartigen Fällen kann das thermoelektrische Heizsystem durch alternative Systeme wie z.B. Thermosolar-Energiesysteme oder auch Blockkraftwerke mit Verbrennungskraftmaschinen ersetzt werden. Dabei ist es vorteilhaft möglich, nicht nur die gewonnene elektrische Energie zu verwenden, sondern auch die Abwärme der Verbrennungskraftmaschine zur Erwärmung des Thermoöls in dem Kreislauf zu verwenden.

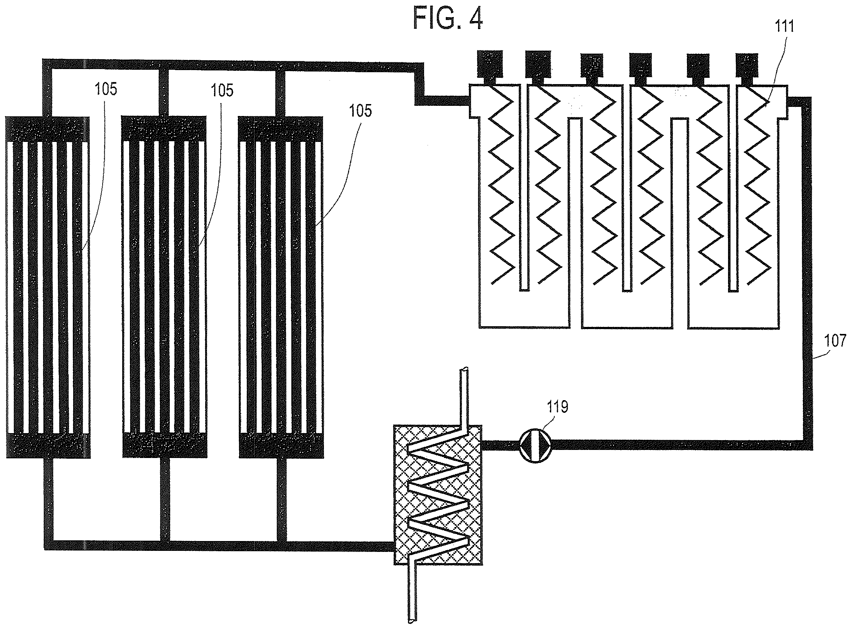

Fig. 4 zeigt eine Alternative zu den in Figs. 1 bis 3 dargestellten Vorrichtungen zum Erwärmen eines fermentierbaren Ausgangsstoffes zur Getränkeherstellung. Der Unterschied zu der voranstehend vorgestellten Vorrichtung besteht darin, dass eine umkehrbare Pumpe 119 bereitgestellt ist, die das Thermoöl als Wärmetransportmittel sowohl in die erste wie auch in die zweite Strömungsrichtung pumpen kann. Dementsprechend kann gemäß dieser Variante auch die Umgehungsleitung 107b entfallen.

Während die Erfindung mit Bezug auf derzeit bevorzugte Ausführungsformen beschrieben wurde, sei darauf hingewiesen, dass der Bereich der Erfindung lediglich durch die anhängenden Ansprüche definiert ist. Vorteilhafte Abwandlungen im Rahmen der Ansprüche sind jederzeit möglich.

So ist es insbesondere möglich, anstelle einer elektrischen Heizung auch eine Heizung auf Basis von Thermo-Solarenergie oder ein Blockkraftwerk mit einer Verbrennungskraftmaschine einzusetzen. In diesem Fall kann auch die Abwärme aus dem Abgasstrang des Blockheizkraftwerks zur Erwärmung des Phasenwechselmaterials in dem Wärmespeicher über den Thermoölkreislauf erfolgen. Diese Variante ist insbesondere für sehr entlegene Gebiete interessant, in denen die Verfügbarkeit von elektrischer Energie nicht immer gegeben ist.

Anstelle die Lade- und Entladepumpe der Fig. 1 bis 3 in der gezeigten Weise anzuordnen, kann auch eine einzelne umkehrbare Pumpe bereitgestellt sein, und die Strömung durch den Wärmeabgaberaum 103 bzw. die Umgehungsleitung 107b mittels Ventilen oder äquivalenten Mitteln herbeigeführt werden.

## Patentansprüche

1. Vorrichtung zum Erwärmen eines fermentierbaren Ausgangsstoffes zur Getränkeherstellung mit
einem Wärmetransportmittelkreislauf (107), in dem ein Wärmetransportmittel in einer ersten Strömungsrichtung über einen Wärmespeicher zum Speichern/Abgeben von Wärme, ein Heizmittel (111) zum Erwärmen des Wärmetransportmittels, und einen Wärmeabgaberaum (103), in dem die Wärme von dem Wärmetransportmittel zu dem in einer Leitung (101) strömenden fermentierbaren Ausgangsstoff übertragen wird, transportiert wird
**dadurch gekennzeichnet, dass**
der Wärmespeicher als Latentwärmespeicher (105) ausgebildet ist, in dem eine Übertragung von Wärme von dem Wärmetransportmittel zu einem Phasenwechselmaterial in dem Latentwärmespeicher oder umgekehrt stattfindet.

2. Vorrichtung zum Erwärmen eines fermentierbaren Ausgangsstoffes zur Getränkeherstellung nach Anspruch 1, wobei die Strömungsrichtung des Wärmetransportmittels in dem Wärmetransportmittelkreislauf (107) zum Laden des Wärmespeichers in eine zweite Strömungsrichtung umgekehrt wird.

3. Vorrichtung zum Erwärmen eines fermentierbaren Ausgangsstoffes zur Getränkeherstellung nach Anspruch 1 oder 2, wobei der Wärmetransportmittelkreislauf (107) über eine den Wärmeabgaberaum (103) umgehende Umgehungsleitung (107b) verfügt, durch die das Wärmetransportmittel während des Ladens des Wärmespeichers (105) transportiert wird.

4. Vorrichtung zum Erwärmen eines fermentierbaren Ausgangsstoffes zur Getränkeherstellung nach einem der Ansprüche 1 bis 3, wobei der Transport des Wärmetransportmittels über eine Pumpe (115, 117) bewirkt wird, die in einem nicht aktivierten Zustand einen Durchsatz des Wärmetransportmittels verhindert.

5. Vorrichtung zum Erwärmen eines fermentierbaren Ausgangsstoffes zur Getränkeherstellung nach einem der Ansprüche 1 bis 4, wobei der Transport des Wärmetransportmittels in der ersten Strömungsrichtung durch eine außerhalb einer den Wärmeabgaberaum (103) umgehenden Umgehungsleitung (107b) vorgesehenen Pumpe (115) erfolgt, während der Transport des Wärmetransportmittels in einer zweiten Strömungsrichtung durch eine in der den Wärmeabgaberaum (103) umgehenden Umgehungsleitung (107b) vorgesehene Pumpe (117) erfolgt.

6. Vorrichtung zum Erwärmen eines fermentierbaren Ausgangsstoffes zur Getränkeherstellung nach einem der Ansprüche 1 bis 5, wobei als Phasenwechselmaterial ein Paraffin oder ein Salz eingesetzt ist, wobei bevorzugt dessen Verflüssigungstemperatur zwischen 130° C und 150° C liegt und dessen Rekristallisierungstemperatur zwischen 130° C und 120° C liegt.

7. Vorrichtung zum Erwärmen eines fermentierbaren Ausgangsstoffes zur Getränkeherstellung zum Erwärmen eines fermentierbaren Ausgangsstoffes nach einem der Ansprüche 1 bis 6, wobei das Heizmittel als elektrische Heizung (111) ausgeführt ist, und/oder das Wärmetransportmittel ein Thermoöl ist.

8. Verfahren zum Erwärmen eines fermentierbaren Ausgangsstoffes zur Getränkeherstellung mit den Schritten:
- Transportieren des fermentierbaren Ausgangsstoffes durch eine Leitung (101), die durch einen Wärmeabgaberaum (103) geführt ist,
- Transportieren eines Wärmetransportmittels in einer ersten Strömungsrichtung in einem Kreislauf (107) über einen Latentwärmespeicher (105), in dem eine Übertragung von Wärme von dem Wärmetransportmittel zu einem Phasenwechselmaterial in dem Latentwärmespeicher oder umgekehrt stattfindet zum Speichern/Abgeben von Wärme, ein Heizmittel (111) zum Erwärmen des Wärmetransportmittels, und den Wärmeabgaberaum (103), in dem die Wärme von dem Wärmetransportmittel zu dem in der Leitung (101) strömenden fermentierbaren Ausgangsstoff übertragen wird.

9. Verfahren zum Erwärmen eines fermentierbaren Ausgangsstoffes zur Getränkeherstellung nach Anspruch 9, wobei der Wärmespeicher (105) nach seiner teilweisen oder vollständigen Entladung durch Umkehren der Strömungsrichtung des Wärmetransportmittels in eine zweite Strömungsrichtung wieder geladen wird.

## Claims

1. Device for heating a fermentable starting product for beverage production, having
a heat transport medium circuit (107) in which a heat transport medium is transported in a first flow direction via a heat store for storing/releasing heat, a heating means (111) for heating the heat transport medium, and a heat release chamber (103) in which the heat is transferred from the heat transport medium to the fermentable starting product flowing in a line (101),
**characterized in that**
the heat store is designed as a latent heat store (105) in which heat is transferred from the heat transport medium to a phase-change material in the latent heat store or vice versa.

2. Device for heating a fermentable starting product for beverage production according to Claim 1, wherein the flow direction of the heat transport medium in the heat transport medium circuit (107) is reversed to a second flow direction for charging the heat store.

3. Device for heating a fermentable starting product for beverage production according to Claim 1 or 2, wherein the heat transport medium circuit (107) has a bypass line (107b) which bypasses the heat release chamber (103) and through which the heat transport medium is transported during charging of the heat store (105).

4. Device for heating a fermentable starting product for beverage production according to one of Claims 1 to 3, wherein transport of the heat transport medium is effected by means of a pump (115, 117) which, in a deactivated state, prevents a throughput of the heat transport medium.

5. Device for heating a fermentable starting product for beverage production according to one of Claims 1 to 4, wherein the heat transport medium is transported in the first flow direction by means of a pump (115) provided outside a bypass line (107b) that bypasses the heat release chamber (103), whereas the heat transport medium is transported in a second flow direction by means of a pump (117) provided in the bypass line (107b) that bypasses the heat release chamber (103).

6. Device for heating a fermentable starting product for beverage production according to one of Claims 1 to 5, wherein a paraffin or a salt is used as the phase-change material, wherein its melting point is preferably between 130°C and 150°C and its recrystallization temperature is preferably between 130°C and 120°C.

7. Device for heating a fermentable starting product for beverage production for heating a fermentable starting product according to one of Claims 1 to 6, wherein the heating means is designed as an electric heat source (111), and/or the heat transport medium is a thermal oil.

8. Method for heating a fermentable starting product for beverage production, having the steps of:
- transporting the fermentable starting product through a line (101) which is guided through a heat release chamber (103),
- transporting a heat transport medium in a first flow direction in a circuit (107) via a latent heat store (105), in which heat is transferred from the heat transport medium to a phase-change material in the latent heat store or vice versa, in order to store/release heat, a heating means (111) for heating the heat transport medium, and the heat release chamber (103) in which the heat is transferred from the heat transport medium to the fermentable starting product flowing in the line (101).

9. Method for heating a fermentable starting product for beverage production according to Claim 9, wherein after the heat store (105) has been partially or completely discharged, it is again charged by reversing the flow direction of the heat transport medium to a second flow direction.

## Revendications

1. Dispositif pour chauffer une substance de base fermentable en vue de la fabrication d'une boisson, avec
un circuit d'agent de transport de chaleur (107), dans lequel un agent de transport de chaleur est transporté dans une première direction d'écoulement via un accumulateur de chaleur destiné à accumuler/céder de la chaleur, un moyen de chauffage (111) pour chauffer l'agent de transport de chaleur, et une chambre de cession de chaleur (103), dans laquelle la chaleur est transférée de l'agent de transport de chaleur à la substance de base fermentable circulant dans une conduite (101),
**caractérisé en ce que**
l'accumulateur de chaleur est réalisé sous forme d'accumulateur de chaleur latente (105), dans lequel il se produit un transfert de chaleur de l'agent de transport de chaleur à un matériau à changement de phase dans l'accumulateur de chaleur latente ou inversement.

2. Dispositif pour chauffer une substance de base fermentable en vue de la fabrication d'une boisson selon la revendication 1, dans lequel la direction d'écoulement de l'agent de transport de chaleur dans le circuit d'agent de transport de chaleur (107) est inversée dans une deuxième direction d'écoulement pour la charge de l'accumulateur de chaleur.

3. Dispositif pour chauffer une substance de base fermentable en vue de la fabrication d'une boisson selon la revendication 1 ou 2, dans lequel le circuit d'agent de transport de chaleur (107) comporte une conduite de dérivation (107b) contournant la chambre de cession de chaleur (103), à travers laquelle l'agent de transport de chaleur est transporté pendant la charge de l'accumulateur de chaleur (105).

4. Dispositif pour chauffer une substance de base fermentable en vue de la fabrication d'une boisson selon l'une quelconque des revendications 1 à 3, dans lequel le transport de l'agent de transport de chaleur est provoqué par une pompe (115, 117), qui dans un état non activé empêche un débit de l'agent de transport de chaleur.

5. Dispositif pour chauffer une substance de base fermentable en vue de la fabrication d'une boisson selon l'une quelconque des revendications 1 à 4, dans lequel le transport de l'agent de transport de chaleur dans la première direction d'écoulement est effectué par une pompe (115) prévue à l'extérieur d'une conduite de dérivation (107b) contournant la chambre de cession de haleur (103), tandis que le transport de l'agent de transport de chaleur dans une deuxième direction d'écoulement est effectué par une pompe (117) prévue dans la conduite de dérivation (107b) contournant la chambre de cession de chaleur (103).

6. Dispositif pour chauffer une substance de base fermentable en vue de la fabrication d'une boisson selon l'une quelconque des revendications 1 à 5, dans lequel on utilise comme matériau à changement de phase une paraffine ou un sel, dans lequel sa température de liquéfaction se situe de préférence entre 130°C et 150°C et sa température de recristallisation se situe de préférence entre 130°C et 120°C.

7. Dispositif pour chauffer une substance de base fermentable en vue de la fabrication d'une boisson pour chauffer une substance de base fermentable selon l'une quelconque des revendications 1 à 6, dans lequel le moyen de chauffage est un chauffage électrique (111), et/ou l'agent de transport de chaleur est une huile thermique.

8. Procédé pour chauffer une substance de base fermentable en vue de la fabrication d'une boisson comprenant les étapes suivantes:
- transporter la substance de base fermentable à travers une conduite (101), qui est menée à travers une chambre de cession de chaleur (103),
- transporter un agent de transport de chaleur dans une première direction d'écoulement dans un circuit (107) via un accumulateur de chaleur latente (105), dans lequel il se produit un transfert de chaleur de l'agent de transport de chaleur à un matériau à changement de phase dans l'accumulateur de chaleur latente ou inversement afin d'accumuler/céder de la chaleur, un moyen de chauffage (111) pour chauffer l'agent de transport de chaleur, et la chambre de cession de chaleur (103), dans laquelle la chaleur est transférée de l'agent de transport de chaleur à la substance de base fermentable circulant dans la conduite (101).

9. Procédé pour chauffer une substance de base fermentable en vue de la fabrication d'une boisson selon la revendication 9, dans lequel on charge de nouveau l'accumulateur de chaleur (105), après sa décharge partielle ou totale, par inversion de la direction d'écoulement de l'agent de transport de chaleur dans une deuxième direction d'écoulement.
